# EUROPEAN PATENT APPLICATION

(11) **EP 2 079 207 A1**
(43) Date of publication of application: **15.07.2009**
(21) Application number: 07846097.9
(22) Date of filing: 19.12.2007
(51) Int. Cl.: H04L 12/58

(54) **A METHOD AND DEVICE FOR PROCESSING THE NOTIFICATION MESSAGE**

(30) Priority: 30.05.2007 CN 200710108398; 07.08.2007 CN 200710137555
(71) Applicant: Huawei Technologies Co., Ltd., Longgang District, Shenzhen Guangdong 518129 (CN)
(72) Inventor: ZHAO, Qin, Guangdong 518129 (CN); LI, Kepeng, Guangdong 518129 (CN); CHAI, Xiaoqian, Guangdong 518129 (CN); ZHAO, Hui, Guangdong 518129 (CN)
(74) Representative: Gulde Hengelhaupt Ziebig & Schneider
(86) International application number: PCT/CN2007/071271
(87) International publication number: WO 2008/144992

(57) **Abstract**

A method and apparatus for Notification message processing is provided. The method includes: receiving, from a Data Synchronization (DS) server, a Notification message for trigging the establishment of a session connection, the Notification message carrying instruction information for instructing a DS client to perform at least one action. The DS client performs a corresponding action according to the instruction information carried in the Notification message.

## Description

### CROSS REFERENCE TO RELATED APPLICATIONS

The invention claims the priority of the Chinese patent application No. 200710108398.0, "Method and Device for Session Connection and Synchronization Session Initiation" filed on May 30, 2007, and the priority of the Chinese patent application No. 200710137555.0, "Method and Device for Notification Message Processing" filed on August 7, 2007, the contents of the two applications are incorporated herein by reference.

### FIELD OF THE INVENTION

The invention relates generally to the field of communication, and more particularly, to a method and device for Notification message processing in the field of data synchronization technology.

### BACKGROUND

With the technology of modern communication playing a more and more important role in people's work and daily life of, higher and higher requirements are posed on the quality of data transmission. Data Synchronization (DS) is very important in data transmission. DS technology relates to data synchronization between mobile devices and network servers. Synchronized data include telephone directories, address books, schedules, short messages and mails, etc.

In an existing DS message, a notification mechanism is provided for the server to deliver Notification messages to terminal devices. Terminal devices initiate session connections with servers according to information such as SessionID (Session Identifier) and ServerID (Server Identifier) in Notification messages. Delivery of Notification messages may be performed by means of short messages, Over-the-Air Technology PUSH (OTA PUSH), etc.

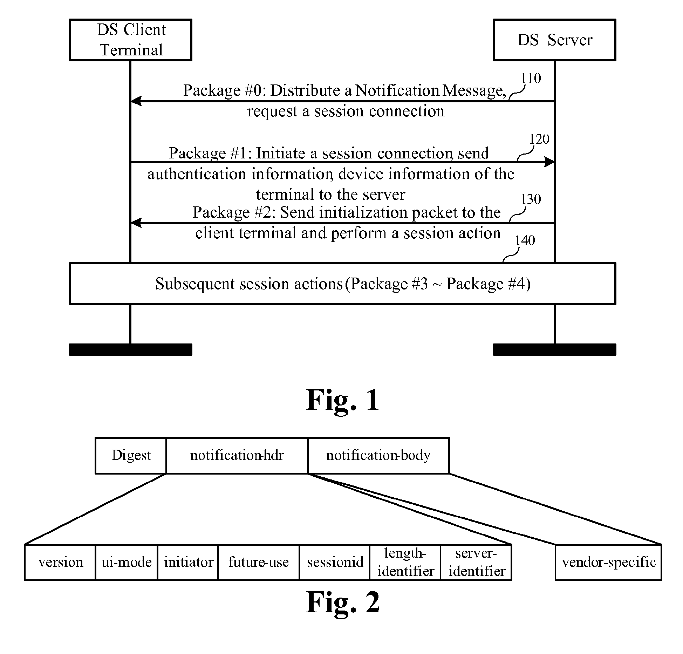

A flowchart for the current management of a session between a DS server and a DS client is shown in Fig. 1. In step 110, the DS server delivers a Notification message to the DS client, to request a session connection. Then in step 120, the DS client initiates a session connection with the DS server, and sends authentication information and device information of the DS client to the DS server. The authentication information and device information is included in a Package #1 message of the management session. Then in step 130, the DS server sends a Package #1 message to the DS client, and in the Package #1 message an initialization package for the session action is carried. Afterwards, subsequent session actions are performed by means of Package #3-Package #4 messages, as illustrated in step 140.

The format of the existing DS Notification message is illustrated in Fig. 2.

The fields in the header of the Notification message are explained as follows:

```
          <digest> ::= 128*BIT                        ;value of the MD5 digest
          <version> ::= 10*BIT                        ; version information
          <ui-mode> ::= <not-specified> / <background> /       ; user interaction mode
          <informative> / <user-interaction>     ;
          <not-specified> ::= "00"               ; not specified
          <background> := "01"                   ; background mode
          <informative> ::= "10"                 ; informative mode
          <user-interaction> ::= "11"            ; user interaction mode
          <initiator> ::= <client> / <server>    ; session initiator
          <client> ::= "0"                       ; initiated by the Client
          <server> ::= "1"                       ; initiated by the Server
          <future-use> ::= 27*BIT                ; reserved for extension
          <sessionid> ::= 16*BIT                 ; session identifier
          <length-identifier> ::= 8*BIT          ; length of the server identifier
          <server-identifier> ::= <length-identifier>*CHAR        ; server identifier
          <vendor-specific> ::= n*BIT                     ; reserved for extension
```

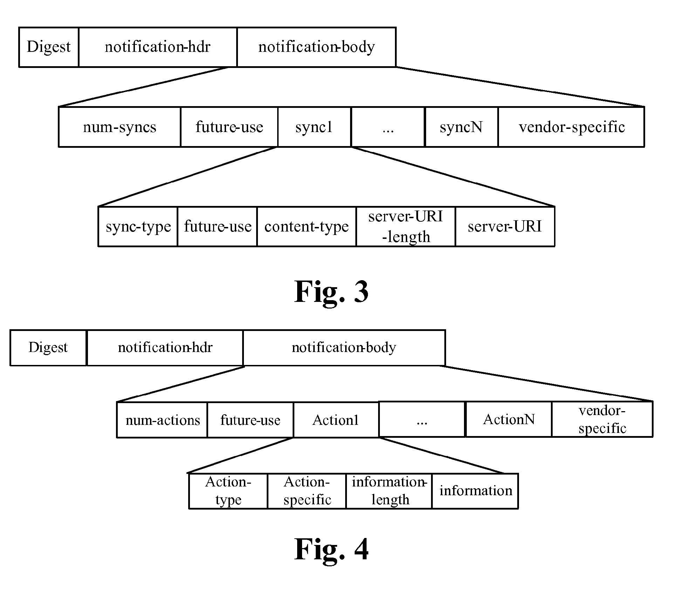

The format of the notification-body of the DS Notification message is illustrated in Fig. 3. In Fig. 3, the field "num-syncs" indicates the number of synchronization actions. The field "future-use" is reserved for future extension. The fields "sync1" through "syncN" indicate a number of specific synchronization actions. The field "sync-type" indicates the type of the synchronization. The field "content-type" indicates the type of the content of the database to be synchronized. The field "server-URI-length" indicates the length of the field "server-URI". The field "server-URI" is used to store the name of the server database to be synchronized. It is apparent from above that the DS Notification message indicates the type of synchronization, the database to be synchronized, etc.

However, it is noticed by the inventor that there is at least one problem in the existing mechanism of session management: the resource of the over-the-air interface is not used efficiently. For example, the Client and the Server have already been authenticated in the transport layer, and it is not necessary for the client to report authentication information again. If the client reports authentication information once again, the resource of the over-the-air interface is wasted. Or the Client and the Server have already been authenticated in the transport layer, but it is still required by the server that the client should report authentication information and authentication should be performed in the application layer, before the management/synchronization session may be setup. At this moment, if the client does not report authentication information, the server returns an error message of "without authentication information of the client", and it is necessary for the client to report the authentication information once again. Therefore, one more interaction with the server occurs, which causes a waste of the resource of the over-the-air interface. Or it is not required by the server that the client should report the complete device information, but the client reports the complete device information instead to the server, which causes a waste of the resource of the over-the-air interface.

Furthermore, in the conventional art, the type of synchronization initiated by the client after receiving the Notification message is selected according to the unilateral data modification information of the client, and the types of synchronization such as slow-synchronization, fast-synchronization and refresh-synchronization are very old. In an intelligent synchronization, the two parties which request synchronization may selectively send data information and data fingerprint information by analyzing the data modification information and database information of the other party. For example, if the synchronization direction specified by the server is two-way, the client does not initiate a one-way synchronization. But in the case that the client cannot select an appropriate synchronization mechanism, session efficiency may be lowered.

It is seen from the above that, because in the conventional art the client cannot exactly know what action and in what manner the server expects the client to perform, therefore, a plurality of interactions may occur between the client and the server, which may waste the resource of the over-the-air interface, and lower session efficiency.

### SUMMARY

The embodiments of the invention provide a method and apparatus for Notification message processing, with which, network resources can be saved and session efficiency can be increased.

An embodiment of the invention provides a method for Notification message processing. The method includes: receiving, from a Data Synchronization (DS) server, a Notification message for trigging the establishment of a session connection, the Notification message carrying instruction information for instructing a DS client to perform at least one action; and performing by the DS client a corresponding action according to the instruction information carried in the Notification message.

An embodiment of the invention provides a Data Synchronization (DS) client. The DS client includes: a receiving module, adapted to receive, from a Data Synchronization (DS) server, a Notification message for trigging the establishment of a session connection, the Notification message carrying instruction information for instructing the DS client to perform at least one action; an parsing module, adapted to analyze the Notification message received by the receiving module to obtain the instruction information; and a processing module, adapted to perform a corresponding action according to the instruction information analyzed by the parsing module from the Notification message.

An embodiment of the invention provides a Data Synchronization (DS) server. The server includes: a generating module adapted to generate a Notification message for trigging the establishment of a session connection, the Notification message carrying instruction information for instructing a DS client to perform at least one action; and a sending module adapted to send the Notification message generated by the generating module to the DS client.

In an embodiment of the invention, the DS client receives, from a Data Synchronization (DS) server, a Notification message for trigging the establishment of a session connection. The Notification message carries instruction information for instructing the DS client to perform at least one action. The DS client performs a corresponding action according to the instruction information carried in the Notification message. Because the DS client can learn what action the DS server requires the DS client to perform, and the manner for performing the action, by the Notification message for trigging the establishment of a session connection, the plurality of interactions between the DS client and the DS server caused due to the action manner does not meet the requirement of the server can be prevented; thus network resources are saved, and the session efficiency is increased.

### BRIEF DESCRIPTION OF THE DRAWINGS

Fig. 1 is a flowchart illustrating the management of the session between a DS server and a DS client in the conventional art;

Fig. 2 is a diagram illustrating the format of the DS Notification message in the conventional art;

Fig. 3 is a diagram illustrating the format of the notification-body of the DS Notification message in the conventional art;

Fig. 4 is a diagram illustrating the format of the Notification message in various embodiments of the present invention;

Fig. 5 is a flowchart illustrating the method for the processing of the Notification message in the first embodiment of the present invention;

Fig. 6 is a diagram illustrating the format of the Notification message in the first embodiment of the present invention;

Fig. 7 is a diagram illustrating the format of the Notification message carrying two Action fields in the second embodiment of the present invention;

Fig. 8 is a diagram illustrating the Action field carrying an action instruction for empty session initiation in the second embodiment of the present invention;

Fig. 9 is a flowchart illustrating the method for the processing of the Notification message in the second embodiment of the present invention;

Fig. 10 is a diagram illustrating the Action field carrying an action instruction for reporting authentication information in the second embodiment of the present invention;

Fig. 11 is a diagram illustrating the Action field carrying an action instruction for reporting device information in the second embodiment of the present invention;

Fig. 12 is a flowchart illustrating the method for the processing of the Notification message in the third embodiment of the present invention; and

Fig. 13 is a flowchart illustrating the method for the processing of the Notification message in the fifth embodiment of the present invention.

### DETAILED DESCRIPTION

The invention is described in further detail with reference to the figures, in order to make the object, the technical solution and the advantages of the invention more obvious.

In the various embodiments of the invention, by extending the Notification message for trigging the establishment of a session connection, to the format as illustrated in Fig. 4, instruction information for instructing the DS client to perform at least one action is carried in the Notification message.

Specifically, the message body of the Notification message includes: a field of number of actions (num-actions field) sized 4 bits, for carrying the number N of actions which the DS client is instructed to perform; a field of future-use reserved for extension; N fields of action (Action fields), each field of action is for carrying an instruction for a corresponding action; and a field of vendor-specific reserved for extension. It is not difficult to find out that the structure of the Notification message in an embodiment of the invention is quite similar to that of the Notification message in the conventional art (as illustrated in Fig. 3), the num-actions field corresponds to the num-syncs field in Fig. 3, the Action field corresponds to the sync field in Fig. 3, the future-use field and the vendor-specific field are reserved similarly. Because it is not necessary to change much of the structure of the Notification message in the conventional art, the embodiments of the invention can be compatible with the conventional art.

The way each action field carries action instructions for corresponding actions is as follows.

Each action field includes: a field of action type (Action-type field), a field of action specific information (Action-specific field), a field of information length (information-length field) and a field of information (information field). The fields in each action field are explained in the following.

```
          <Action-type> ::= 4*BIT           ; for carrying the action type which the action
 belongs to
          <Action-specific> ::= 28*BIT      ; for carrying parameter information specific to
 the action
          <information -length> ::= 8*BIT   ; for carrying the length of the information field
          <information> ::= <information-length>*CHAR                     ; for carrying the
 information needed when the action is performed
```

Here the action type may be synchronization, reporting authentication information, reporting device information, session information indication, or empty session initiation. For example, when the value of the Action-type field in the Action field is 0000, it is indicated that an action instruction for reporting authentication information is carried in the Action field; when the value of the Action-type field in the Action field is 0001, it is indicated that an action instruction for reporting device information is carried in the Action field; when the value of the Action-type field in the Action field is 0010, it is indicated that an action instruction for session information indication is carried in the Action field; when the value of the Action-type field in the Action field is 0011, it is indicated that an action instruction for empty session initiation is carried in the Action field; when the value of the Action-type field in the Action field is 0100 it is indicated that an action instruction for performing synchronization is carried in the Action field.

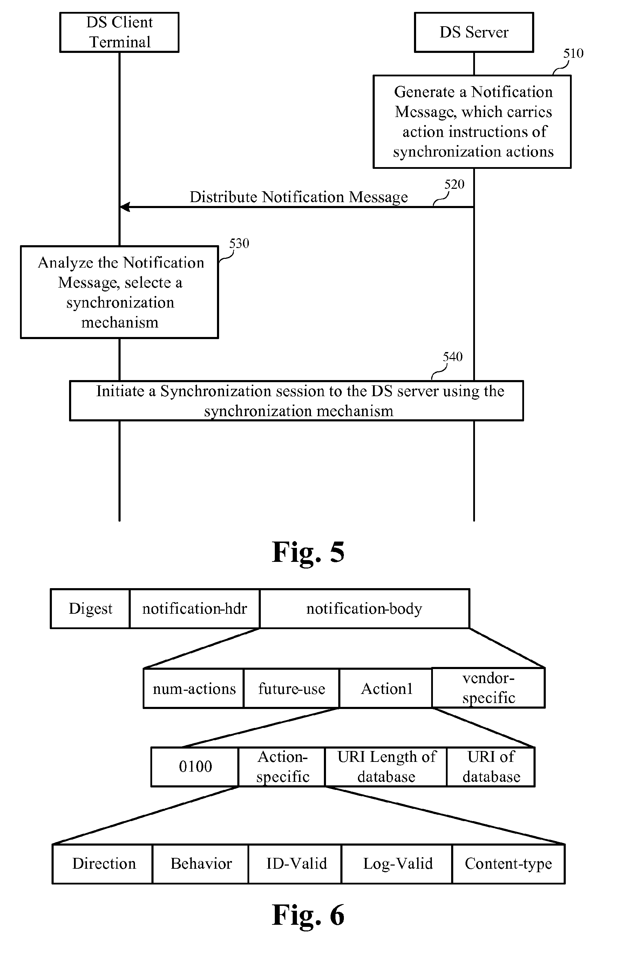

The first embodiment of the invention is described below. The embodiment relates to a method for Notification message processing. In the embodiment, a description is presented taking the following case as an example: an Action field instructing the DS client to perform synchronization is carried in the message body of the Notification message, and the DS client initiates a synchronization session according to the Action field. The flowchart is shown in Fig. 5.

In step 510, the DS server generates a Notification message, and the Notification message carries instruction information for instructing the DS client to perform a synchronization action.

Specifically, because the action which the DS client is instructed to perform by the Notification message in the present invention is only synchronization, the value of the num-actions field in the message body is 1, only an Actions field is included which carries an action instruction for synchronization. The value of the Action-type field in the Actions field is 0100 (for the above mentioned case); carried in the Action-specific field is parameter information related to synchronization actions; carried in the information field is a synchronized database identifier, such as a Uniform Resource Identifier (URI) of the database; carried in the information-length field is the length of the information field, such as the length of the database URI.

Here, the Action-specific field further includes the following fields: a Direction field, a Behavior field, an ID-Valid field, a Log-Valid field, a Content-type field, such as illustrated in Fig. 6. The fields are each described below.

The Direction field is used to indicate the direction of synchronization, the length of which is 2*BIT, which is described specifically below:

```
          <Direction>::=<No-way>/<from-server>/<from-client>/<two-way>     ; direction
 information
          <No-way>::= '00'             ; no-way
          <from-server>::= '01'        ; from server, one-way
          <from-client>::= '10'        ; from client, one-way
          <two-way>::= '11'            ; two-way
```

The Behavior field is used to indicate the synchronization behavior, such as refresh or preserve the data at the server/client side, the length of which is 1*BIT, which is described specifically below:

```
          <Behavior>::=<Preserve>/<Refresh>    ; synchronization behavior
          <Preserve>::= '0'                    ; preserve
          <Refresh>::= '1'                     ; refresh
```

The type of synchronization may be determined by the Behavior field in conjunction with the Direction field. Fore example, if <Direction> = 01 and <Behavior> = 1, which means it is a DS session initiated unilaterally by the server, then after the synchronization, the data at the client is refreshed.

The ID-Valid field is used to indicate whether the identifier information (ID) of the data entry at the server side is valid, the length of which is 1*BIT, which is specifically described below:

```
          <ID-Valid>::=<valid>/<invalid>         ; the validity of ID
          <valid>::= '1'                         ; the ID is valid
          <invalid>::= '0'                       ; the ID is invalid
```

It should be noticed that it is necessary for the DS server to maintain a mapping table for the identifier information of the two parties.

The damage of database may cause the identifier information invalid, which imposes an influence upon the selection of the mechanism of the two parties. For example, if the identifier information of the server is invalid, after the initiation of session by the client, the server may request the client to send its fingerprint first, and the server determines which data already exist in the server side according to the fingerprint, and which data do not exist in the server side, after that, the server instructs the client to send the data which is needed to be sent.

The Log-Valid field is used to indicate whether the change log at the server side is valid, the length of which is 1*BIT, which is specifically described below:

```
          <log-valid>::=<valid>/<invalid>      ; validity of the change log
          <valid>::= '1'                       ; the log is valid
          <invalid>::= '0'                     ; the log is invalid
```

The log is used to record the change of the database and the change of the data entries at the DS server side. If the log is invalid, the DS server is not able to tell the DS client which of its data entries have been changed. This imposes an influence upon the selection of the synchronization mechanism of the two parties.

The Content-type field is used to indicate the data type in the database, such as a type of vcard, or a type of email, the length of which is 23*BIT.

In another embodiment, the Behavior field and the Direction field may be designed to be in the Action-type field.

```
          <action-type>::=<data-sync><direction><behavior>
                                          ; Action Type Information, 4*BIT
          <data-sync> ::= '0'                    ; Data Sync,1*BIT
```

The <data-sync> field is 0 means the type of action is data synchronization; otherwise, the type of action is another one.

The Behavior field and the Direction field are the same as described previously.

Then, in step 520, the DS server delivers the generated Notification message to the DS client. Specifically, the DS server may deliver the generated Notification message as illustrated in Fig. 6 to the DS client, by the way of OTA PUSH or the Session Initiation Protocol (SIP) PUSH or short messages.

Then in step 530, the DS client analyzes the received Notification message, and selects a synchronization mechanism. Specifically, the DS client obtains the action instruction for synchronization carried in the Action field in the message, by analyzing the received Notification message, and selects an appropriate synchronization mechanism according to the action instruction.

The selection of synchronization mechanism includes one of the selection of synchronization direction, the selection of synchronization data, and the selection of synchronization behavior, or any combination of them.

The selection of synchronization data includes: whether to send all the data entries; whether only to send the modified data entries.

The selection of synchronization behavior includes: whether to send data fingerprint information, whether to require the other party to compare the data entries, whether to require the other party to overwrite its stored data entries using the received data entries.

The selection of an appropriate synchronization mechanism by the DS client according to the action instruction carried in the Action field is briefly described with a few examples.

For example, if the ID mapping table of the DS server is invalid, the DS server cannot identify the data entry identifier even the DS client sends it. Therefore, the DS client should select to send data fingerprint information, or select to send all data. Or if the DS server modifies many data entries, the DS client should select two-way synchronization or DS server one-way synchronization, and data fingerprint information should be sent, in order to prevent conflict between the modifications of the data entries of the two parties. Practically, there are also many other cases which are not illustrated here one by one.

Then, in step 540, the DS client initiates a synchronization session with the DS server using the selected synchronization mechanism.

It is not difficult to find out that in the present embodiment, the Notification message carries an action instruction for performing synchronization. Therefore, the DS client is enabled to select corresponding synchronization mechanism according to this information, the number of session interactions for the selection of synchronization mechanism is decreased and the efficiency of session is increased.

The second embodiment of the invention provides a method for Notification message processing. The second embodiment is approximately similar to the first embodiment. the difference between them is: in the first embodiment, the Notification message only indicates that the DS client should perform a synchronization, but in the second embodiment, the Notification message indicates not only that the DS client should perform a synchronization, but also that the DS client should perform other actions.

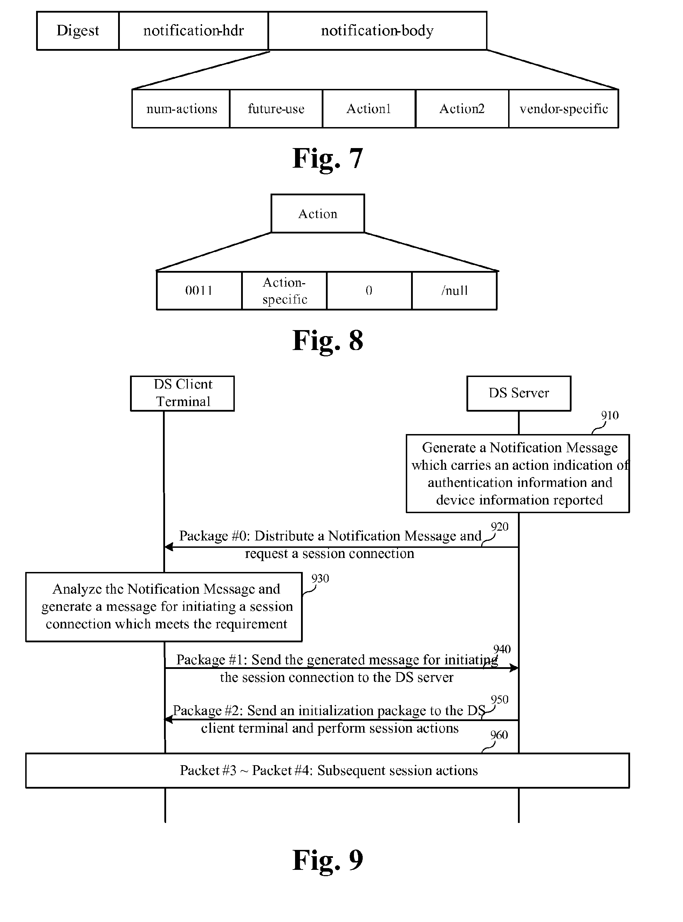

For example, in the generated Notification message, the DS server carries not only an Action field instructing the DS client to perform synchronization, but also an Action field instructing the DS client to perform an action of session information indication, as shown in Fig. 7. The Action1 field carries an action instruction for performing synchronization action, which is precisely the same as the Action1 field in the first embodiment, and is not described here. The Action2 field will be described specifically below.

The value of the Action-type field in the Action2 field (such as 0010) indicates what the Action field carries is an action instruction for session information indication, what the information field carries is the content of the session information, and what the information-length field carries is the content length of the session information.

After the DS client has obtained the Action2 field by analysis, the session information in the information field may be displayed to the user in the format of displayable text, such as, "You have a new Email." A synchronization session is initiated, and the new email on the server is synchronized to the DS client. Because the information of the Action-specific field in the Action2 field is not needed when the action of session information indication is performed by the DS client, the DS client may ignore the analysis of the Action-specific field.

Practically, after the DS client has obtained the Action1 field from the Notification message by analysis, it is also required to initiate a synchronization session according to the action instruction for synchronization action carried by the Action1 field, which process has been described in the description of the first embodiment, and the description will not be repeated here.

Furthermore, the Notification message may also carry an Action field instructing the DS client to initiate an empty session action. After the DS client obtained the Action field by analysis, it may learn from the value of the Action-type field in the Action field that the DS server expects the DS client to initiate an empty session. If it is assumed that the value of the Action-type field is 0011, it is indicated that what the Action field carries is an action instruction for empty session initiation, the Action field is shown in Fig. 8.

Based on the empty session initiated by the DS client, the DS server may negotiate with the DS client for data synchronization or device capability. For example, after the empty session is setup, if the DS server needs the device information of the DS client, the device information may be obtained by sending a Get command:

```
          <Get>
             <CmdID> 1 </CmdID>
             <Item>
                     <Target>
                            <LocURI>./DevInfo</LocURI>
          </Target>
             </Item>
          </Get>
```

Because the information in the Action-specific field in the Action2 field is not needed when the DS client performs the action of empty session initiation, the DS client may ignore the analysis of the Action-specific field.

It is not difficult to find out that the action instructions for the DS client are actually carried by the Action fields in the Notification message, and the Action fields are independent from each other. Therefore, the Notification message may carry only one Action field, or a plurality of Action fields. The Action field carried may be an action instruction for synchronization action, an action instruction for empty session initiation, or an action instruction for session information indication. Furthermore, it may be an action instruction for reporting authentication information or device information. Carrying an action instruction for reporting authentication information or device information in the Action field will be described in the description of the third embodiment below.

The third embodiment of the invention involves a method for Notification message processing. In the present embodiment, the message body of the Notification message carries an Action field for instructing the DS client to report authentication information, and an Action filed for instructing the DS client to report device information. The DS client reports authentication information and device information according to the two Action fields. The specific flowchart is shown in Fig. 9.

In step 910, the DS server generates a Notification message for trigging the establishment of a session connection. The message carries action instructions for reporting authentication information and device information.

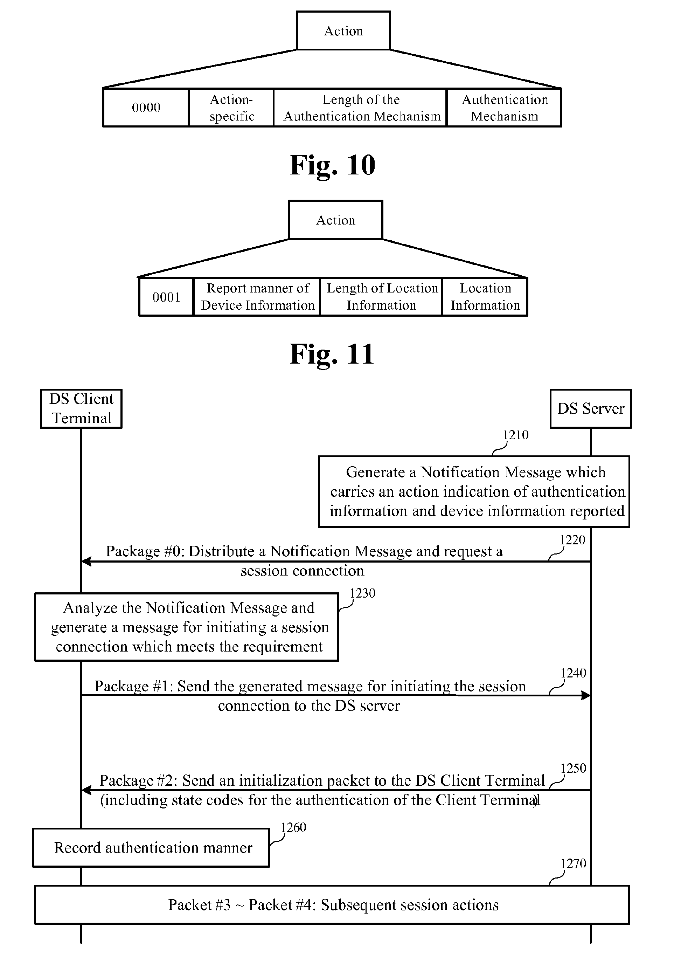

The way the Action field carries the action instruction for reporting authentication information is shown in Fig. 10. The value of the Action-type in the Actions field (such as 0000) indicates what the present Action field carries is an action instruction for reporting authentication information; what the information field carries is the authentication mechanism which the authentication information (which the client is asked to report) belongs to, such as an auth-basic authentication mechanism, an auth-MD5 authentication mechanism, an SHA-256 authentication mechanism, an SHA-1 authentication mechanism, or an authentication mechanism of not specified mechanism; what the information-length field carries is the length of the authentication mechanism in the information field. The information-length field and the information field are described below.

```
          <information-length > ::= 8*BIT ; length of the authentication mechanism
          <information>::=<auth-basic>/<auth-MD5>/<SHA-256>/<SHA-1>/<not
 specified>                                          ; the authentication mechanism
          <auth-basic >                        ; the basic authentication mechanism
          < auth-MD5>                          ; MD5 authentication mechanism
          < SHA-256>                           ; SHA-256 authentication mechanism
          < SHA-1>                             ; SHA-1 authentication mechanism
          <not specified>                      ; not specified authentication mechanism
```

It should be noted that if <information>::=<not specified>, it means that the DS server does not specify the authentication mechanism, and the DS client may authenticate using the authentication method specified by the value of the authentication type AAuthPref on the parameter configuration Management Object in the DS standard, or the authentication method used in the last successful session.

The way the Action field carries the action instruction for reporting device information is illustrated in Fig. 11. The value of the Action-type field in the Actions field (such as 0001) indicates what the Action field carries is an action instruction for reporting device information; what the Action-specific field carries is a reporting manner of the device information, such as reporting the complete device information, reporting the updated device information, reporting empty device information, or reporting the identifier of device information database; what the information field carries is the information about the location in the DS client where the device information is stored; what the information-length field carries is the length of the location information in the information field. The description of the Action-specific field, the information-length field and the information field is as follows.

```
          <Action-specific > ::=<completed>/<updated>/<null>/URI
                                   ; manner of reporting device information
          <completed> ::= '00'     ; complete device information
          <updated > ::= '01'      ; updated device information
          <null>::='10'            ; empty device information
          <URI>::='11'             ; identifier of device information database
          <information-length > ::= 8*BIT
                                   ; length of location link field of device information
          <information >::= < information-length >*CHAR
                                   ; location link of device information
```

When <Action-specific> ::= <URI>, what it is indicated is that the DS client is required to report the URI link which stores the device information of the DS client, then the DS server retrieves the device information of the DS client by accessing according to this address. In this way, the resource of the over-the-air interface may be saved.

The <information> field indicates the storage location of the device information in the DS client. For example, the DS server asks the DS client to report all the device information, then the <Action-Specific> field is <completed>, and the <information> field is ./.../devinf. If the DS server asks the DS client to report the updated device information, the <Action-Specific> field is <updated>, and the <information> field is ./.../devinf/datastore/CTCAP, which indicates the update information under the CTCAP element. The specification of a part of the device information may be represented with hierarchical URI, such as ./.../devinf/datastore/SyncCap, which indicates the DS client is required to report the device information under the SyncCap element. When there is a plurality of elements with the same name on the DS client, they may be represented by carrying matching conditions in the URI.

For example, there is a plurality of DataStore elements on the DS client, and there is a plurality of CTCap elements under the DataStore:

```
          <DataStore>
              <DisplayName> addressbook </DisplayName>
              <SourceRef> ... </SourceRef>
              <CTCap>
                 <CTType> syncml:filtertype-cgi </CTType>
                 ...
              </CTCap>
              <CTCap>
                 <CTType> text/x-vcard </CTType>
                 ...
               </CTCap>
               ...
          </DataStore>
          <DataStore>
               <DisplayName> Email </DisplayName>
               ...
          </DataStore>
```

Then if the DS client is required by the DS server to report the information of the DataStore with <DisplayName> being "addressbook", it may be specified with the following URI:

```
          ./DevInf/DataStore[DisplayName="addressbook"].
```

Furthermore, if the DS client is required by the DS server to report the information with <CTCap> being "text/x-vcard" in DataStore with <DisplayName> being "addressbook", it may be specified with the following URI:

```
          ./DevInf/DataStore[DisplayName="addressbook"]/CTCap[CTType="text/x-vcard.
```

If what are compared are properties rather than elements, an @Element method is used, for example: ./DevInf/DataStore[@DisplayName="addressbook"].

In step 920, the DS server delivers the generated Notification message containing the two Action fields to the DS client. Specifically, the DS server may deliver the generated Notification message containing two Action fields to the DS client, by means of OTA PUSH (or SIP PUSH) or short messages, to request a session connection.

Then, in step 930, the DS client analyzes the received Notification message, to generate a message which complies with the requirements to initiate a session connection; the message for initiating a session connection is a Package #1 message.

Specifically, the DS client analyzes the Action field carried in the Notification message, and decides how the authentication information and the device information are reported in the following Package #1 message, according to the action instruction for reporting authentication information and the action instruction for reporting device information carried respectively in the two Action fields.

Then in step 940, the DS client sends the generated Package #1 message to the DS server. Steps 950 and 960 are the same as steps 130 and 140 respectively, and the description of which will not be repeated here.

In the present embodiment, the DS client may learn the specific manner of reporting authentication information and device information required by the DS server by means of Notification message, such as the mechanism of the reported authentication information, and the manner of reporting the device information. Therefore, the plurality of interactions between the DS client and the DS server, caused by the inconsistency between the reporting manner of the authentication information and device information and the requirement of the DS server, may be prevented, and network resources may be saved. Pratically, in actual applications, in the Notification message, it may also be possible that only the action instruction for reporting authentication information or reporting device information is carried.

The fourth embodiment of the invention involves a method for Notification message processing. Based on the third embodiment, the present embodiment further includes a specific action of the DS client when the DS server does not specify the authentication mechanism, i.e., <information>::=<not specified>.

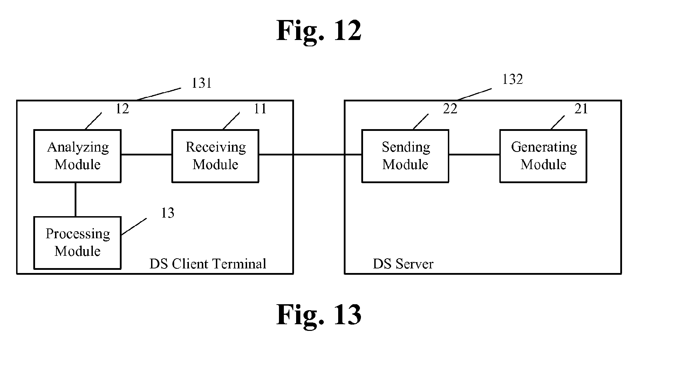

The specific flowchart is shown in Fig. 12. Steps 1210 through 1250 are the same as steps 910 through 950 respectively, and the description of which will not be repeated. Because in the present embodiment, the DS server does not specify the authentication mechanism, the DS client will search locally the parameter configuration Management Object for the node with authentication type of AAuthPref. If the node exists and has been assigned a value, the authentication information is reported in the authentication method indicated by the value. If the node does not exist, or the node exists but is not assigned a value, safety authentication is performed in a default authentication method. For example, the default authentication method is to report the authentication information with the authentication mechanism being "auth-basic" in the Package #1 message, the authentication information with the authentication mechanism being "auth-basic" will be carried in the Package #1 message generated by the DS client. In the present embodiment, the authentication in the default authentication method is successful, in other words, a status code indicating the successful authentication is carried in the Package #2 message sent from the DS server to the DS client.

Then, in step 1260, after the DS client learns that the authentication is successful according to the received Package #2 message, the default authentication method is recorded, in order for the authentication method to be used in the following authentication, which may increase the probability of successful authentication. Specifically, there are two recording methods:

(1) The default authentication method is recorded in the node with authentication type of AAuthPref for specifying the authentication method. For the previous examples, the authentication method, in which the authentication information with the authentication mechanism for reporting being "auth-basic", is used as the value of the AAuthPref node, and is recorded in the AAuthPref node.

(2) The default authentication method is recorded in the node in the parameter configuration Management Object, which node is extended and is related with authentication. For the previous examples, a node related to authentication is extended with in the parameter configuration Management Object, and the authentication method for reporting authentication information with authentication mechanism being "auth-basic" is recorded in the extended node.

Then, the procedure proceeds to step 1270. Step 1270 is the same as step 960, and its description will not be repeated here.

Furthermore, when the DS client receives the Notification message of the DS server, the DS client may reply with confirmation information to the DS server, indicating that the Notification message is received successfully, after which, the instructed action is performed. Or, in certain special cases, the DS client returns only a confirmation message, without performing the action instructed by the DS server. For example, the authentication by the DS client of the Digest in the Notification message delivered by the DS server is not successful, the DS client is busy and not able to perform the action instructed by the DS server, or the user refuses to perform the action instructed by the DS server, etc. In these cases, the DS client may reply for the Notification message with receiving status information.

In the information replied with by the DS client, new authentication information <NextNonce> may be carried for the DS server to be used when Notification message is delivered by the DS server next time. The DS client may also send status code information to the DS server, in order to indicate status, such as authentication failure, client busy, refused by the user, etc., as illustrated in table 1.

| Status code | Description |
|---|---|
| 501 | successful reception at the DS client |
| 502 | authentication failure |
| 503 | version mismatch |
| 504 | format error |
| 505 | the identifier of the DS server does not exist |
| 506 | refused by the user |
| 507 | DS client busy |
| 508 | not specified error |
| 507-520 | reserved for extension |

For example, in the Package #1 message, the DS client may reply for the Notification message. An example of the message is as follows.

```
          <SyncML>
            <SyncHdr>
           ...
            </SyncHdr>
            <SyncBody>
             <Status>
               <CmdID>1</CmdID>
               <CmdRef>0</CmdRef>
               <MsgRef>0</MsgRef> ; indicating a reply for the Notification message
               <Chal>             ; new authentication information
                 <Meta>
                  <Type xmlns='syncml:metinf'>syncml:auth-md5</Type>
                  <Format xmlns='syncml:metinf'>b64</Format>
                  <NextNonce
 xmlns='syncml:metinf'>ZG9iZWhhdmUNCg==</NextNonce>
                 </Meta>
               </Chal>
               <Data> 506 </Data> ; indicating that the user refuses the session
             </Status>

             ...

            </SyncBody>
          </SyncML>
```

The DS server may not reply once more for this message.

It is worth noting that in the previous embodiments, the DS client is actually terminal equipment. If the DS client does not have the function of receiving Notification messages, the DS client has to receive Notification messages via a Notification client. The Notification client relies on the service implementation. For example, if the Notification message is sent by means of OTA PUSH concerning the service realization, the Notification client is an OTA PUSH client; if the Notification message is sent by means of short messages, the Notification client is a short message client. Similarly, if the DS server does not have the function of sending Notification messages, the DS server has to send Notification messages via a Notification server.

It should be noted that in the previous embodiments, the value of the num-actions field indicates the number of actions the DS client is required by the DS server to perform. For example, if the value of the num-actions field is 1, it is indicated that the DS client is required to perform one action. The type of the action and the specific action instruction are carried in one Action field. If the value of the num-actions field is 2, it is indicated that the DS client is required to perform two actions. The types of the two actions and the specific action instructions are carried in two Action fields, respectively. But in practice, the DS client may be instructed to perform an action of empty session initiation by setting the value of the num-actions field to be 0. In that case, the Notification message may not carry an Action field. Furthermore, because for certain actions, such as the action of session information indication, the Action-specific field in the Action field is actually of no use, the filed may be omitted in practice. In other words, if certain fields in the Action field are not used, the fields may be omitted.

The fifth embodiment of the invention involves a system for Notification message processing, as shown in Fig. 13, which include a DS client 131 and a DS server 132.

The DS server 132 includes: a generating module 21 adapted to generate a Notification message for triggering the establishment of a session connection, the Notification message carrying instruction information for instructing the DS client to perform at least one action; a sending module 22 adapted to send the Notification message generated by the generating module to the DS client.

The DS client 131 includes: a receiving module 11 adapted to receive, from a DS server, a Notification message for triggering the establishment of a session connection; an analyzing module 12 adapted to analyze the Notification message received by the receiving module 11; and a processing module 13 adapted to perform a corresponding action according to the instruction information obtained by the parsing module 12 from the Notification message. The action the client is instructed to perform is one of or any combination of: synchronization; reporting authentication information; reporting device information; session information indication; or empty session initiation.

The manner in which the DS server carries action instructions in Notification messages for the actions are illustrated in Fig. 4, description of which will not be repeated. How the Action fields carry action instructions for corresponding actions are also described in detail in the previous embodiments, the description of which will not be repeated.

In general, in the embodiments of the invention, because the DS client may learn the actions and the specific manners for performing the actions which the DS client is expected by the DS server to perform via Notification messages, the plurality of interactions between the client and the server caused due to the manner of performing actions does not meet the requirement of the server may be prevented, network resources are saved and session efficiency is increased.

For example, the Notification message carries an action instruction for performing synchronization; the DS client may be configured to select respective synchronization mechanism according to the information, thus the number of session interactions of selecting the synchronization mechanism is decreased and the session efficiency is increased.

If the Notification message carries action instructions for reporting authentication information and/or device information, the DS client may be configured to learn from the Notification message the specific manner of reporting authentication information and/or device information required by the DS server, such as the mechanism of reporting the authentication information, and the manner of reporting device information. The plurality of interactions between the DS client and the DS server caused due to the manner of reporting authentication information and device information does not meet the requirement of the DS server may be prevented, thus network resources are saved.

Furthermore, because the structure of the Notification message of an embodiment of the invention is extremely similar to that of the Notification message in the conventional art (as shown in Fig. 3), the num-actions field corresponds to the num-syncs field in Fig. 3, the Action field corresponds to the sync field in Fig. 3, and the future-use field and the vendor-specific field are also retained. Therefore, an embodiment of the invention may be configured to be compatible with the conventional art, without modifying the structure of the Notification message in the conventional art too much.

Though the invention has been illustrated and described by reference to certain preferred embodiments of the invention, it will be appreciated by the skilled person in the art that various modifications may be made to them without deviating from the scope and spirit of the invention.

## Claims

1. A method for Notification message processing, comprising:
receiving, from a Data Synchronization (DS) server, a Notification message for trigging the establishment of a session connection, the Notification message carrying instruction information for instructing a DS client to perform at least one action; and
performing a corresponding action according to the instruction information carried in the Notification message.

2. The method for Notification message processing according to claim 1, wherein the action which the DS client is instructed to perform is at least one of:
synchronization;
reporting authentication information;
reporting device information;
session information indication; and
empty session initiation.

3. The method for Notification message processing according to claim 1, wherein the message body of the Notification message comprises:
a field of number of actions for carrying the number of actions which the client is instructed to perform; and
a field of action for carrying an action instruction for the corresponding action.

4. The method for Notification message processing according to claim 3, wherein the field of action comprises:
a field of action type for carrying the action type which the action belongs to;
a field of action specific information for carrying parameter information specific to the action;
a field of information for carrying information needed when performing the action; and
a field of information length for carrying the length of the field of information.

5. The method for Notification message processing according to claim 4, wherein:
the action type carried in the field of action type is a type of synchronization action;
the information needed when performing the action and carried in the field of information is an identifier of the database to be synchronized; and
the parameter information specific to the action and carried in the field of action-specific information is parameter information specific to a data synchronization action;
wherein performing the action instructed by the instruction information comprises:
selecting synchronization mechanism according to the parameter information related to the data synchronization action; and
initiating a data synchronization session with the DS server using the selected synchronization mechanism.

6. The method for Notification message processing according to claim 5, wherein the parameter information comprises at least one of:
information indicating the direction of synchronization;
information indicating the behavior of synchronization;
information indicating whether the identifier information of a data entry at the server side is valid;
information indicating whether the change log at the server side is valid; and
information indicating the data type in the database.

7. The method for Notification message processing according to claim 5, wherein
selecting synchronization mechanism according to the parameter information related to the synchronization action comprises at least one of: selecting a direction of synchronization, selecting to send synchronization data, and selecting a synchronization behavior according to the parameter information related to the synchronization action;
selecting a direction of synchronization comprises selecting the direction of synchronization to be one-way from server, one-way from client, two-way, or no-way;
selecting to send synchronization data comprises selecting to send all data entries or selecting to send only modified data entries; and
selecting a synchronization behavior comprises: selecting whether to send data fingerprint information, selecting whether to require the other party to compare data entries, or selecting whether to require the other party to refresh data entries stored therein using received data entries.

8. The method for Notification message processing according to claim 4, wherein
the action type carried in the field of action type is an action type of reporting authentication information; and
the information needed when performing the action and carried in the field of information comprises the authentication mechanism of the authentication information which the client is asked to report.

9. The method for Notification message processing according to claim 4, wherein
the action type carried in the field of action type is an action type of reporting device information;
the information needed when performing the action and carried in the field of information comprises location information indicating the location at which the device information is stored in the client; and
the action-related parameter information carried in the field of action-specific information comprises the reporting manner of the device information.

10. The method for Notification message processing according to claim 9, wherein the information needed when performing the action and carried in the field of information further comprises:
conditional matching information for instructing the client to report a part of device information which meets the conditions.

11. The method for Notification message processing according to claim 4, wherein:
the action type carried in the field of action type is the type of an action of session information indication; and
the information needed when performing the action and carried in the field of information, is the content of the session information

12. The method for Notification message processing according to claim 4, wherein:
the action type carried in the field of action type is a type of empty session initiation.

13. The method for Notification message processing according to claim 1, wherein:
the action which a DS client is instructed to perform is an action of empty session initiation; and
the message body of the Notification message carries a field of the number of actions, and the value of the field of the number of actions is "0".

14. The method for Notification message processing according to claim 1, wherein it further comprises, before performing the corresponding action:
determining whether to perform the corresponding action according to the instruction information carried in the Notification message, based on the current status;
if the corresponding action is required to be performed, the corresponding action is performed; and
if the corresponding action is not required to be performed, a confirmation message is replied to the DS server, indicating refusing to perform the corresponding action.

15. The method for Notification message processing according to claim 14, wherein the confirmation message carries one of the following reasons of refusing to perform the action:
the client being busy;
authentication failure; and
being refused by the user.

16. The method for Notification message processing according to claim 1, wherein it further comprises, after receiving the Notification message and before performing the corresponding action:
returning a confirmation message to the DS server, indicating that the Notification message is received successfully.

17. The method for Notification message processing according to claims 14 or 16, comprising: reporting a new authentication message in the confirmation message.

18. A Data Synchronization (DS) client, comprising:
a receiving module, adapted to receive, from a Data Synchronization (DS) server, a Notification message for trigging the establishment of a session connection, the Notification message carrying instruction information for instructing the DS client to perform at least one action;
a parsing module, adapted to analyze the Notification message received by the receiving module to obtain the instruction information; and
a processing module, adapted to perform a corresponding action according to the instruction information obtained by analysis by the parsing module from the Notification message.

19. The DS client according to claim 18, wherein the action which the client is instructed to perform is at least one of:
synchronization;
reporting authentication information;
reporting device information;
session information indication; and
empty session initiation.

20. A Data Synchronization (DS) server, comprising:
a generating module, adapted to generate a Notification message for trigging the establishment of a session connection, the Notification message carrying instruction information for instructing a DS client to perform at least one action; and
a sending module, adapted to send the Notification message generated by the generating module to the DS client.

21. The DS server according to claim 20, wherein the action which the client is instructed to perform is at least one of:
synchronization;
reporting authentication information;
reporting device information;
session information indication; and
empty session initiation.
